# EUROPEAN PATENT SPECIFICATION

(11) **EP 1 738 596 B1**
(45) Date of publication and mention of the grant of the patent: **27.07.2011**
(21) Application number: 05737442.3
(22) Date of filing: 21.04.2005
(51) Int. Cl.: H04W 8/02

(54) **TARGET BASE STATION - BASED MEDIA GATEWAY SELECTION IN A DISTRIBUTED MOBILE SWITCHING CENTER ENVIRONMENT**
AUF DER ZIELBASISSTATION BASIERENDE MEDIA-GATEWAY-AUSWAHL IN EINER VERTEILTEN MOBILVERMITTLUNGSSTELLEN-UMGEBUNG
SELECTION DE PASSERELLE DE MEDIA BASEE SUR UN STATION DE BASE CIBLE DANS UN ENVIRONNEMENT DE CENTRE DE COMMUTATION MOBILE REPARTIE

(30) Priority: 21.04.2004 US 564041 P
(43) Date of publication of application: 03.01.2007
(73) Proprietor: Alcatel Lucent, 75007 Paris (FR)
(72) Inventor: AGUILAR, Michael, Richardson, TX 75082 (US); BERTEAU, Charles, Marvin, Plano, TX 75025 (US)
(74) Representative: Schmidt, Werner Karl
(86) International application number: PCT/US2005/013827
(87) International publication number: WO 2005/107289

(56) References cited:
- EP-A- 1 334 631
- WO-A-97/47151
- US-A- 5 818 915
- US-A- 5 818 915
- US-A- 5 878 126
- US-A- 5 878 126
- US-A- 5 978 678

## Description

### TECHNICAL FIELD

This description relates telecommunications, and more particularly to enabling media gateway selection in a distributed mobile switching center environment based on one or more target base stations.

### BACKGROUND

International Patent Application WO 02/37866 discloses a method comprising the features of the preamble of claim 1. To achieve an efficient and flexible routing of signaling messages between a core network and an access network in a mobile communication cellular network, it is proposed to provide a pool of mobile switching apparatuses between the core network and the access network. Each mobile switching apparatus in the pool comprises a signaling unit adapted to issue a paging message to the access network for connection establishment to a mobile terminal. Further, it is proposed to provide each mobile switching apparatus in the pool with a relay unit adapted to receive a paging response from the access network. Further, the relay unit is adapted to determine a mobile switching apparatus in the pool of mobile switching apparatuses handling the paging response.

International Patent Application WO 97/47151 describes a method wherein the registration notification signal sent to the home cellular system when an internationally roaming cellular mobile station registers in a foreign cellular system includes an identification of the currently serving switching node. Upon subsequent receipt of an incoming call dialed to the roaming mobile station home directory number, the home cellular system signals the serving cellular system and a temporary local directory number is assigned and returned to the home cellular system. The switching node identification is then processed to identify the proper international dialing digits for calling the country where the serving switching node is located. The returned temporary local directory number is then appended to the identified international dialing digits to form an international telephone number which is used by the home cellular system to route the received call to the currently serving cellular system for delivery to the called internationally roaming mobile station.

U.S. Patent 5,878,126 discloses a method and system of routing a call, made to a single number of a subscriber, to a particular subscriber location of a plurality of subscriber locations based on the geographic area from which the call originated is disclosed. The method routes a call from a caller that is placed by dialing a single telephone number that is operative for serving all of the subscriber locations. The method includes identifying the calling party with a specific location identifier indicating the location of the calling party, providing a range table of selected ranges of location identifiers and if the specific location identifier is within one of the selected ranges of the range table, the call is routed to the destination location corresponding.to the selected range containing the specific location identifier. If the specific location identifier is not located within one of the selected ranges, the call is routed to the destination location corresponding to the specific location identifier located in an auxiliary database containing subscriber locations. The geographic areas are represented by zip codes and multiple categories of zip codes may be represented.

U.S. patent 5,818,915 describes a recyclable cellular telephone having an inner rigid cellular electronics supporting frame member surrounded by a replaceable outer cover. The telephone is acquired having a limited period of use. The electronics of the telephone operate to disable the telephone following expiration of the period of use. Following expiration of the period of use, the telephone is returned for refurbishment where the outer cover is stripped and replaced and the electronics tested before being recycled with a new period of use for an another acquisition. The cellular network supporting telephone operation also monitors the period of use, disabling telephone access to the network following expiration. Directory numbers are selectively assigned to the recyclable telephones from a pool of available numbers, with assigned numbers returned to the pool after expiration of a predetermined period or telephone deactivation for re-use by another recyclable telephone. The recyclable telephones are activated and deactivated in a number of ways, including through the use of a separate activation and deactivation station which communicates with the telephones over a radio frequency communications link.

Conventional cellular telecommunications networks include mobile switching centers (MSCs) each operating to route calls between base stations that include radio equipment for serving one or more cells in the cellular network and other MSCs or public switched telephone networks (PSTN). Conventional MSCs handle both bearer traffic for transporting user information (e. g., voice or other data in an integrated services digital network (ISDN)) and signaling traffic for establishing and controlling call connections and managing the cellular network. The MSC exchanges signaling information with other MSCs and with other networks (e. g., PSTNs) for purposes of call set up, handovers, and coordinating call routing. In addition, the MSC directs the operations of base stations that support radio communications with mobile devices in individual cells of the cellular network.

### SUMMARY

The present invention relates to a method for assigning directory numbers in a distributed mobile switching center environment according to claim 1, a telecommunication system according to claim 10 and an article according to claims 20.

Distributed MSCs (e. g., as can be used with 3GPP, Release 4) perform the same general functions as a conventional MSC but include an MSC server for handling signaling traffic and multiple media gateways for handling bearer traffic. The MSC server includes the intelligence and complexity of the distributed MSC, and the media gateways are controlled by the MSC server. The media gateways can be geographically distributed, can connect to multiple base stations, and serve to route bearer traffic under control of the MSC server.

In one general aspect, a directory number is assigned in a distributed gateway mobile switching center (GMSC) environment in response to receiving a request for routing information from an originating node in a telecommunication network. The GMSC handles signaling in a geographical area for geographically distributed switching nodes, and the request for routing information is associated with a call to a mobile station. A location of the mobile station is determined, and a pool of directory numbers associated with a particular node is identified. The particular node is associated with a portion of the geographical area that includes the location. A directory number from the pool of directory numbers is assigned for use in connecting the call to the mobile station.

Implementations can include one or more of the following features. The directory number is sent in response to the request, and the call is routed to the particular node. The node is one of multiple nodes associated with one of the geographically distributed switching nodes. The directory number is assigned based in part on an originating location for the call. The pool of directory numbers includes a backup pool used in response to a primary pool of directory numbers being unavailable. The pool of directory numbers and the assigned directory number are roaming numbers and/or handover numbers.

In another general aspect, a telecommunications system includes a distributed mobile switching center and a memory storing at least a portion of a set of directory numbers for allocation by the distributed mobile switching center. The distributed mobile switching center includes multiple media gateways, each having multiple associated base stations, and the server is operable to handle signaling for the media gateways. The directory numbers stored in the memory are segmented into pools of directory numbers. Each pool of directory numbers is associated with a particular node under control of the distributed mobile switching center. The particular node is associated with only a portion of a service area for the distributed mobile switching center. Directory numbers are allocated based, at least in part, on a location of a mobile station to be allocated a directory number.

Implementations can include one or more of the following features. The signaling handled by the server relates to controlling bearer traffic handled by the media gateways. Each media gateway provides switching services for beater traffic in only a portion of the service area. Each pool of directory numbers is associated with a media gateway or a base station. A pool index is associated with each pool of directory numbers and the pool index is used to identify directory numbers included in each pool. The server allocates a directory number from a pool of directory numbers in response to a request to provide a roaming number or a handover number. An allocated directory number enables a requesting node to selectively route a call connection to a media gateway in a portion of the service area that includes the mobile station.

The details of one or more implementations are set forth in the accompanying drawings and the description below. Other features will be apparent from the description and drawings, and from the claims.

### DESCRIPTION OF DRAWINGS

FIG. 1 is a block diagram of a telecommunications network that includes a distributed mobile switching center.
FIG 2 is a flow diagram of a process for assigning temporary directory numbers in a telecommunications network.

Like reference symbols in the various drawings indicate like elements.

### DETAILED DESCRIPTION

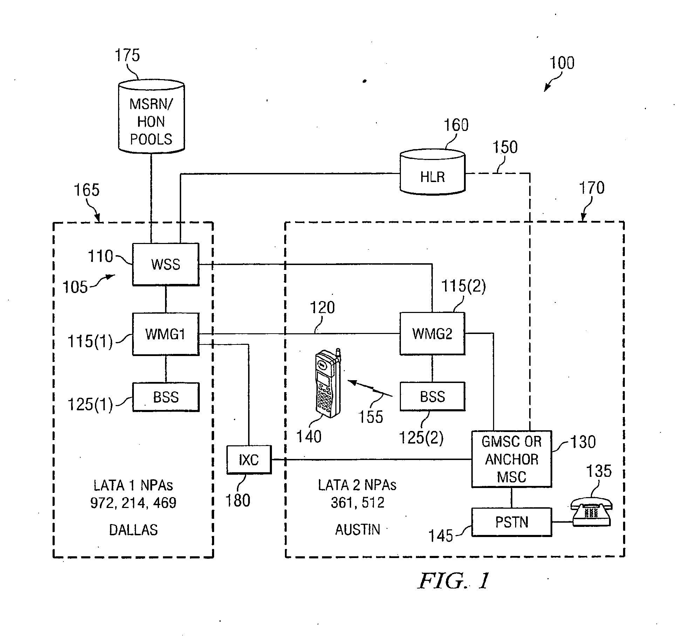

FIG 1 is a block diagram of a telecommunications network 100 that includes a distributed mobile switching center (MSC) 105, or wireless soft switch (WSS). The distributed MSC 105 includes an MSC server 110 that controls multiple media gateways (MGWs) 115(1) and 115(2), or wireless media gateways (WMGs), which are connected by interconnections 120 through which bearer traffic can be routed between different media gateways 115. The MSC server 110 contains the intelligence and complexity of the distributed MSC 105, and the media gateways 115 are controlled by the MSC server 110 to perform switching functions at geographically distributed locations. Accordingly, communications involving the distributed MSC 105 are segregated between signaling traffic, which is handled by the MSC server 110, and bearer traffic, which is handled by the media gateways 115.

The media gateways 115 can be geographically distributed such that each media gateway 115 is associated with a number of base stations and/or base station systems (BSSs) 125 that serve different geographical areas, although, for convenience, only one base station system for each media gateway 115 is illustrated in FIG 1. In the illustrated example, a first media gateway 115(1) serves a geographical area 165 roughly centered in Dallas, and a second media gateway 115(2) serves a geographical area 170 roughly centered in Austin. Each geographical area 165 and 170 can be a local access and transport area (LATA) (e.g., an area in which a carrier offers local exchange telephone services) associated with a numbering plan area (e.g., an area code). For example, the Dallas-based geographical area 165 includes the "972," "214," and "469" area codes, and the Austin-based geographical area 170 includes the "361" and "512" area codes.

One or more of the media gateways 115 interface with a gateway mobile switching center (GMSC) and/or an anchor MSC 130. The GMSC and/or anchor MSC 130 further interfaces with a PSTN 145. In some implementations, a PSTN 145 can also or alternatively interface directly with one or more media gateways 115.

When a call is placed from a telephone 135 in a fixed network to a mobile station 140 in a cellular network served by the distributed MSC 105, the PSTN 145 routes the call to a gateway MSC 130. The gateway MSC 130 can be a conventional MSC or a distributed MSC. In some cases, a PSTN 145 can perform some or all of the same functions as are described as being performed by the gateway MSC 130. The gateway MSC 130 sends signaling data (e.g., a send routing information (SRI) message) in, for example, a GSM MAP message 150 to a home location register (HLR) 160 (e.g., to determine if the mobile station 140 is currently located in the cellular network, is located in a different cellular network, or is unavailable), which is periodically updated through registration messages received from the mobile station 140. When the HLR 160 receives the SRI message, it sends signaling data (e.g., a provide roaming number (PRN) GSM MAP message) to the serving MSC server 110 that is indicated in the HLR data stored for that mobile station. This serving MSC server 110 can be the same MSC as the Gateway MSC server.

The serving MSC server 110 allocates a mobile station roaming number (MSRN) from an MSRN pool 175 associated with the distributed MSC 105, and the allocated MSRN is returned to the HLR 160 in a PRN response message and to the gateway MSC 130 in an SRI response message. The gateway MSC 130 uses the MSRN to route the call to the distributed serving MSC 105 or, more specifically, to a media gateway 115 of the distributed serving MSC 105. The serving MSC server 110 also sends signaling data to a base station system 125(2) serving an area in which the mobile station 140 is located to page and establish a radio connection 155 with the mobile station 140 for carrying the call.

A similar situation arises in cases of an inter-exchange handover. In particular, when a call to a mobile station 140 is initially connected through a particular MSC, that MSC becomes an anchor MSC 130 for the call. The anchor MSC 130 can be a conventional MSC or a distributed MSC. If the mobile station subsequently roams out of the region served by the anchor MSC 130 before the call is disconnected, the anchor MSC 130 attempts to find another cellular network and corresponding MSC to which the anchor MSC 130 can handoff the call. Generally, the anchor MSC 130 can determine a need to perform a handoff based on signal strength measurements and can identify a potential target MSC for the handoff based on a cell in which the mobile station 140 is located. The anchor MSC 130 sends signaling data 150 to the target MSC (e.g., the distributed MSC 105, in this example) to confirm that the mobile station 140 is entering an area served by the distributed MSC 105 (e.g., based on signal strength measurements by the distributed MSC 105) and to obtain a handover number (HON), which is allocated by the MSC server 110 from an HON pool 175 in much the same way as the allocation of an MSRN.

Depending on the MSRN/HON that is allocated, the gateway or anchor MSC 130 can route the call to different media gateways 115 of the distributed MSC 105. Generally, the gateway or anchor MSC 130 routes calls based on predefined data stored or retrieved by the gateway or anchor MSC 130. For example, if the allocated MSRN/HON includes an NPA associated with the Dallas-based geographical area 165, the gateway or anchor MSC 130 may route the call through an inter-exchange carrier (IXC) network 180 (e.g., MCI or AT&T) to the first media gateway 115(1). The MSC server 110 directs the first media gateway 115(1) to route the call through an interconnection 120 to the second media gateway 115(2) and directs the second media gateway 115(2) to route the call to the base station system 125(2) to establish a connection to the mobile station 140. This routing scenario is unnecessarily expensive in terms of actual expenses and/o resource costs because the cellular provider generally has to pay long distance fees for use of the inter-exchange carrier network 180 and allocate limited interconnection facilities 120 to the call. If the allocated MSRN/HON includes an NPA associated with the Austin-based geographical area 170, the gateway or anchor MSC 130 may route the call to the second media gateway 115(2). The MSC server 110 directs the second media gateway 115(2) to route the call to the base station system 125(2) to establish a connection to the mobile station 140.

To effectively control which media gateway 115 to which the gateway or anchor MSC 130 routes calls, the MSC server 110 selectively allocates from the MSRN/HON pool 175 a directory number associated with a selected target media gateway 115 and/or a target base station system 125. In addition, the MSC server 110 can allocate a directory number based at least in part on an originating location of a call (e.g., a gateway or anchor MSC or a subscriber station from which the call originates). For purposes of this description, directory numbers include temporarily assigned numbers, such as MSRNs and HONs, in addition to more conventional telephone numbers that are assigned to subscribers on a relatively permanent basis. In some implementations, each media gateway 115, base station system 125, base station, or other node that serves only a portion of an overall geographical area served by the MSC server 110 has a corresponding MSRN/HON pool. Accordingly, when the MSC server 110 receives a PRN message from gateway or anchor MSC 130, the MSC server 110 determines where the mobile station 140 corresponding to the dialed directory number is located using, for example, location data stored in a visitor location register (VLR) of the distributed MSC 105 that is periodically updated by registration messages from the mobile station 140. The location data can identify an absolute location, a relative location, a general vicinity, and/or one or more nodes (e.g., media gateways 115, base station systems 125, or base stations) that serve an area in which the mobile station 140 is located. Based on the location, the MSC server 110 selects a MSRN or HON from an MSRN/HON pool that corresponds to the location and returns the selected MSRN or HON to the gateway or anchor MSC 130 in response to the PRN or handover request message.

The MSRN/HON pools for different locations or nodes can be stored as an overall set. The overall set can be segregated into individually accessible pools or the pool corresponding to each number can be determined by adding an index or pool number that identifies to which pool the number belongs. In some implementations, MSRN/HON pools can be associated with multiple locations or nodes (e.g., nodes that serve adjacent and/or related areas). In other words, some nodes can share an MSRN/HON pool. In addition, a system-wide pool (i.e., for an entire gateway MSC 115 or an entire distributed MSC 105) can be used for handling situations in which none of the numbers in a local pool are available. In some implementations, a hierarchy of MSRN/HON pools can be provided. For example, some pools are associated with individual nodes, some pools are associated with groups of nodes, and one or more pools are not limited to a particular node or area. The less geographically specific pools (e.g., those that serve a group of nodes or are system-wide) can be used for handling overflow, for areas with lower demand, or for instances in which a location of the mobile station 140 cannot initially be determined.

As an example of using a selectively allocated MSRN or HON, when a call is placed to a mobile station 140 from a fixed telephone 135 connected to a PSTN 145, the PSTN 145 routes the call to a gateway MSC 130 based on the directory number dialed from the fixed telephone 135. The gateway MSC 130 sends an SRI message 150 to the HLR 160 corresponding to the dialed directory number. The HLR 160 determines that the mobile station 140 is located in an area served by a distributed MSC 105 and sends a PRN message to an MSC server 110 of the distributed MSC 105. The MSC server 110 retrieves location data for the mobile station 140 from a VLR (e.g., contained within or co-located with the MSC server 110).

Based on the retrieved location data, the MSC server 110 determines that the mobile station 140 is located in an area served by a particular base station system 125(2), which is associated with a second media gateway 115(2) of the distributed MSC 105. The MSC server 110 further identifies, from a set of MSRN pools 175, an MSRN pool assigned to the particular base station system 125(2) and selects an MSRN from the identified MSRN pool. In this example, the mobile station 140 is located in a local access and transport area in an Austin-based area and thus within the "512" area code. As a result, the selected MSRN is a directory number that includes the "512" area code. The selected MSRN is then returned to the gateway MSC 130 for use in routing the call from the fixed telephone 135. In particular, the gateway MSC 130 analyzes the selected MSRN to determine that it includes the "512" area code. Using this information along with predefined routing data stored at or accessed by the gateway MSC 130, the gateway MSC 130 knows that the call is to be routed to the second media gateway 115(2) and routes the call through a trunk between the gateway MSC 130 and the second media gateway 115(2). The second media gateway 115(2), under control of the MSC server 110, routes the call through the base station system 125(2) and over a radio interface 155 to the mobile station 140.

Although the foregoing example illustrates a situation in which a call is placed from a fixed telephone 135 to a mobile station 140 is in a visited network, the described techniques can be used in situations other than that illustrated by the example. For instance, the techniques are not limited to calls placed from a fixed telephone 135 but can be used for calls from another mobile station. Moreover, a similar process to the above example can be used when a handover of a call involving a mobile station 140 is performed from an anchor MSC 130. In particular, the anchor MSC 130 may receive an HON that is allocated based on a location of the mobile station 140 to enable the anchor MSC 130 to route the call to an appropriate media gateway 115(2).

The techniques can also be used when the mobile station 140 is within a home network. For example, the mobile station 140 can have an assigned directory number that includes a "972" area code and that is therefore associated with the first media gateway 115(1). When the mobile station 140 is "roaming" in an Austin-based geographical area 170, the mobile station 140 may technically be in its home network because it is in an area served by the same distributed MSC 105 as its home Dallas-based geographical area 165. However, in responding to an SRI message received by the HLR 160, the MSC server 110 can assign an MSRN from an MSRN pool associated with a base station system 125(2) serving an area where the mobile station 140 is located.

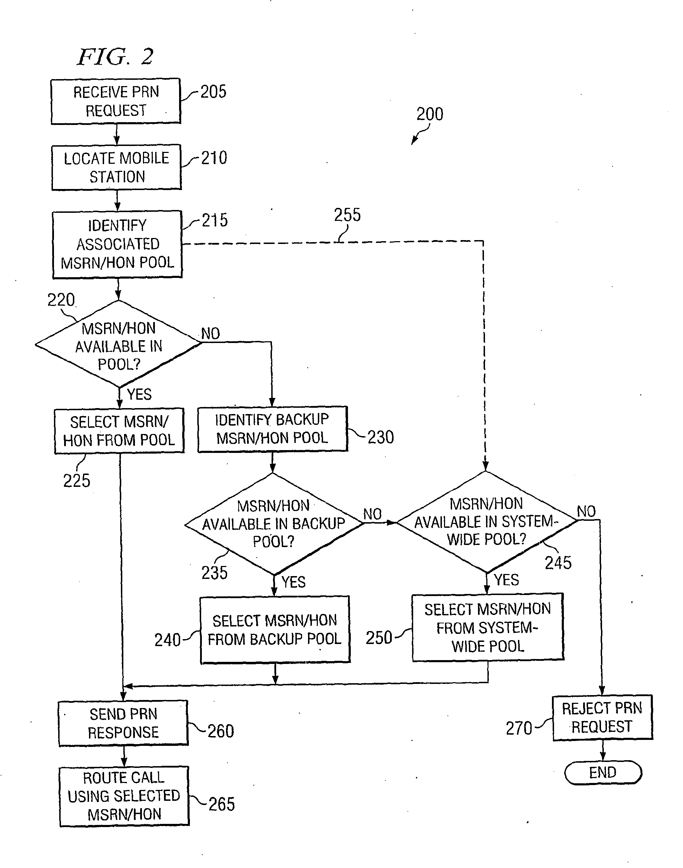

FIG 2 is a flow diagram of a process 200 for assigning temporary directory numbers in a telecommunications network. A request for a temporary directory number (e.g., as a PRN message) for a mobile station is received (205). In response, location data for the mobile station is retrieved (210). The location data can relate, for example, to a base station or media gateway serving an area in which the mobile station is located and can be a base station point code. The location data can be retrieved from an HLR or VLR, in which the location of the mobile station is updated, for example, periodically or each time the mobile station changes cells. Alternatively, the location data can be obtained or retrieved by paging the mobile station. After determining the location of the mobile station, a temporary directory number pool associated with the location (e.g., associated with a base station identified by the location data) of the mobile station is identified (215). The pool can be identified, for example, by a pool number or index corresponding to the base station point code.

A determination is made as to whether a temporary directory number from the identified pool is available (220). If so, an available temporary directory number is selected from the identified pool (225). The temporary directory number can be selected at random or in accordance with a selection algorithm. If a temporary directory number is not available from the identified pool (e.g., all of the temporary directory numbers from the identified pool have been allocated for other mobile stations), a backup temporary directory number pool is identified (230), if such a backup pool is available. The backup pool can be, for example, a temporary directory number pool associated with one or more adjacent or nearby base stations or media gateways or with a media gateway associated with the location data. The backup pool can also be identified using a backup pool number or index corresponding to the base station point code.

A determination is made as to whether a temporary directory number from the identified backup pool is available (235). If so, a temporary directory number is selected from the identified backup pool (240). If a temporary directory number is not available from the identified backup pool, a determination is made as to whether a temporary directory number from a system-wide pool is available (245). If not, a connection cannot be established with the mobile station, and the process 200 ends. In such a case, a message can be sent to the calling or other party. If a temporary directory number is available from the system-wide pool, a temporary directory number is selected from the system-wide pool (250).

Some implementations may not include a backup pool and a system-wide pool. In addition, in some situations, it may not be possible to locate the mobile station and identify a temporary directory number pool if, for example, a pool number is not assigned to the base station point code for the serving base station, the mobile station needs to be paged to determine its location within the network (e.g., if the available location data is expired), or location data from the HLR or VLR is unusable. In such a case, a temporary directory number may be automatically selected, if available, from the system-wide pool (as indicated at 255). Furthermore, some base stations may not have a separate pool assigned, in which case the system-wide pool can be used.

Once a temporary directory number is selected, a response to the request for a temporary directory number is sent (260). The response includes the selected temporary directory number. As a result, a call connection can be established with the mobile station by routing the call in connection with the selected temporary directory number (265). In particular, the selected temporary directory number can enable efficient routing to a media gateway and/or a base station serving the mobile station. Among other things, the present invention avoids a potential unavailability of or a relative cost associated with the use of interconnections 120 and inter-exchange carriers 180 that may be needed if temporary directory numbers are regularly allocated on an MSC-wide basis.

The invention and all of the functional operations described in this specification can be implemented in digital electronic circuitry, or in computer software, firmware, or hardware, including the structural means disclosed in this specification and structural equivalents thereof, or in combinations of them. The invention can be implemented as one or more computer program products, i.e., one or more computer programs tangibly embodied in an information carrier, e.g., in a machine readable storage device or in a propagated signal, for execution by, or to control the operation of, data processing apparatus, e.g., a programmable processor, a computer, or multiple computers. A computer program (also known as a program, software, software application, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub programs, or portions of code). A computer program can be deployed to be executed on one computer or on multiple computers at one site or distributed across multiple sites and interconnected by a communication network.

The processes and logic flows described in this specification, including the method steps of the invention, can be performed by one or more programmable processors executing one or more computer programs to perform functions of the invention by operating on input data and generating output. The processes and logic flows can also be performed by, and apparatus of the invention can be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, the processor will receive instructions and data from a read only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. Information carriers suitable for embodying computer program instructions and data include all forms of non volatile memory, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

A number of implementations have been described. Nevertheless, it will be understood that various modifications may be made. Accordingly, other implementations are within the scope of the following claims.

## Claims

1. A method (200) for assigning directory numbers in a distributed mobile switching center environment, the method comprising:
- receiving (205) a request for routing information at a signaling node in a telecommunication network, the signaling node handling signaling for a plurality of switching nodes (115(1),115(2)), wherein the request for routing information is associated with a call to a mobile station;
**characterized in that**:
- said signaling node handles signaling in a geographical area for a plurality of geographically distributed switching nodes; and
- a directory number is assigned dependent on an originating location for the call and the location of the mobile station,
- wherein the method further comprises the steps of:
- determining (210) a location of the mobile station;
- identifying (215) a temporary directory number pool associated with the location of the mobile station;
- making a determination as to whether a temporary directory number from the identified temporary directory number pool is available;
- if a temporary directory number from the temporary directory number pool is available, then selecting (225) the temporary directory number from the temporary directory number pool for use in connecting the call to the mobile station;
- if a temporary directory number from the temporary directory number pool is not available, then identifying a backup temporary directory number pool;
- making a determination as to whether a temporary directory number from the identified backup pool is available (235);
- if so, a temporary directory number is selected from the identified backup pool (240);
- if a temporary directory number is not available from the identified backup pool, a determination is made as to whether a temporary directory number from a system-wide pool is available (245); and
- if a temporary directory number is available from the system-wide pool, a temporary directory number is selected from the system-wide pool (250).

2. The method of claim 1 wherein said step of assigning the directory number dependent on the originating location for the call and the location of the mobile station includes determining that the directory number is associated with at least one of a media gateway serving the location and a base station serving the location.

3. The method of claim 1 wherein the step of identifying a temporary directory number pool is done in response to a provide roaming number request receive directly from a home location register connected to the signaling node.

4. The method of claim 1 further comprising: sending (260) the directory number in response to the request; and routing (265) the call to the particular node.

5. The method of claim 1 wherein the node comprises one of a plurality of nodes associated with one of the plurality of geographically distributed switching nodes.

6. The method of claim 1 wherein the directory number comprises a handover number.

7. The method of claim 1 wherein the pool of directory numbers and the assigned directory number comprise roaming numbers.

8. The method of claim 1 wherein the node serves the portion of the geographical area.

9. The method of claim 1 wherein the request for routing information comprises a request for a roaming number.

10. A telecommunications system (100) comprising: a distributed mobile switching center (105) including:
- a plurality of media gateways (115(2),115(2)), each media gateway having an associated plurality of base stations (125(1), 125 (2));
- a server (110) adapted to handle signaling for the plurality of media gateways: and
- a memory (175) storing at least a portion of a set of directory numbers for allocation by the distributed mobile switching center;
**characterized in that**:
- the plurality of media gateways is geographically distributed;
- the directory numbers are segmented into pools of directory numbers; and
- the distributed mobile switching center is adapted to assigning a directory number dependent on an originating location for the call and the location of the mobile station, and to carrying out the following steps:
- determining (210) a location of the mobile station;
- identifying (215) a temporary directory number pool associated with the location of the mobile station;
- making a determination as to whether a temporary directory number from the identified temporary directory number pool is available;
- if a temporary directory number from the temporary directory number pool is available, then selecting (225) the temporary directory number from the temporary directory number pool for use in connecting the call to the mobile station;
- if a temporary directory number from the temporary directory number pool is not available, then identifying a backup temporary directory number pool;
- making a determination as to whether a temporary directory number from the identified backup pool is available (235);
- if so, a temporary directory number is selected from the identified backup pool (240);
- if a temporary directory number is not available from the identified backup pool, a determination is made as to whether a temporary directory number from a system-wide pool is available (245); and
- if a temporary directory number is available from the system-wide pool, a temporary directory number is selected from the system-wide pool (250).

11. The telecommunications system of claim 10, wherein said step of assigning the directory number dependent on the originating location for the call and the location of the mobile station includes determining that the directory number is associated with at least one of a media gateway serving the location and a base station serving the location.

12. The telecommunications system of claim 10 wherein the distributed mobile switching center is adapted to identifying a temporary directory number pool in response to a provide roaming number request received directly from a home location register connected to the signaling node.

13. The telecommunications system of claim 10 wherein the signaling handled by the server relates to controlling bearer traffic handled by the media gateways.

14. The telecommunications system of claim 13 wherein each media gateway provides switching services for bearer traffic in only a portion of the service area.

15. The telecommunications system of claim 10 wherein each pool of directory numbers is associated with a media gateway.

16. The telecommunications system of claim 10 wherein each pool of directory numbers is associated with a base station.

17. The telecommunications system of claim 10 wherein a pool index is associated with each pool of directory numbers and the pool index is used to identify directory numbers included in each pool.

18. The telecommunications system of claim 10 wherein an allocated directory number enables a requesting node to selectively route a call connection to a media gateway in a portion of the service area that includes the mobile station.

19. The telecommunications system of claim 10 wherein the server allocates a directory number from a pool of directory numbers in response to a request to provide one of a roaming number or a handover number.

20. An article comprising a machine-readable medium storing instructions for causing data processing apparatus to:
- receive a request for routing information at a signaling node in a telecommunication network, the signaling node handling signaling in a service area for a plurality of switching nodes, wherein the request for routing information is associated with a call involving a mobile station and each switching node associated with only a portion of the service area; and
- select a directory number for use in connecting the call to the mobile station;
**characterized in that**:
- the plurality of switching nodes is geographically distributed; and
- the article further causing said data processing apparatus to assigning a directory number dependent on an originating location for the call and the location of the mobile station, and to carrying out the following steps:
- determining (210) a location of the mobile station;
- identifying (215) a temporary directory number pool associated with the location of the mobile station;
- making a determination as to whether a temporary directory number from the identified temporary directory number pool is available;
- if a temporary directory number from the temporary directory number pool is available, then selecting (225) the temporary directory number from the temporary directory number pool for use in connecting the call to the mobile station;
- if a temporary directory number from the temporary directory number pool is not available, then identifying a backup temporary directory number pool;
- making a determination as to whether a temporary directory number from the identified backup pool is available (235);
- if so, a temporary directory number is selected from the identified backup pool (240);
- if a temporary directory number is not available from the identified backup pool, a determination is made as to whether a temporary directory number from a system-wide pool is available (245); and
- if a temporary directory number is available from the system-wide pool, a temporary directory number is selected from the system-wide pool (250).

21. The article of claim 20 wherein said step of assigning the directory number dependent on the originating location for the call and the location of the mobile station includes determining that the directory number is associated with at least one of a media gateway serving the location and a base station serving the location.

22. The article of claim 20 wherein the particular node comprises one of a switching node or a base station and the machine-readable medium stores instructions for further causing data processing apparatus to control routing of the call to the particular node.

23. The article of claim 20 wherein the signaling node handles signaling traffic for a distributed mobile switching center and the switching nodes handle bearer traffic for the distributed mobile switching center.

## Patentansprüche

1. Verfahren (200) zum Zuweisen von Rufnummern in einer verteilten Mobilvermittlungsstellenumgebung, wobei das Verfahren umfasst:
- Empfangen (205) einer Anforderung für Routing-Informationen an einem Signalisierungsknoten in einem Telekommunikationsnetzwerk, wobei der Signalisierungsknoten das Signalisieren für eine Mehrzahl von Vermittlungsknoten (115(1), 115(2)) verwaltet, wobei die Anforderung für Routing-Informationen mit einem Anruf an die Mobilstation assoziiert ist;
**dadurch gekennzeichnet, dass**:
- Der besagte Signalisierungsknoten das Signalisieren in einer geografischen Zone für eine Mehrzahl von geografisch verteilten Vermittlungsknoten verwaltet; und
- eine Rufnummer in Abhängigkeit von einem Ursprungsort für den Anruf und dem Aufenthaltsort der Mobilstation zugewiesen wird,
- wobei das Verfahren weiterhin die folgenden Schritte umfasst:
- Bestimmen (210) eines Aufenthaltsorts der Mobilstation;
- Identifizieren (215) eines mit dem Aufenthaltsort der Mobilstation assoziierten Pools von temporären Rufnummern;
- Ermitteln, ob eine temporäre Rufnummer aus dem identifizierten Pool von temporären Rufnummern verfügbar ist;
- wenn eine temporäre Rufnummer aus dem Pool von temporären Rufnummern verfügbar ist, Auswählen (225) der temporären Rufnummer aus dem Pool von temporären Rufnummern zur Verwendung für die Herstellung der Verbindung mit der Mobilstation;
- wenn keine temporäre Rufnummer aus dem Pool von temporären Rufnummern verfügbar ist, Identifizieren eines Backup-Pools von temporären Rufnummern;
- Ermitteln, ob eine temporäre Rufnummer aus dem identifizierten Backup-Pool verfügbar ist (235);
- wenn dies der Fall ist wird eine temporäre Rufnummer aus dem identifizierten Backup-Pool (240) ausgewählt;
- wenn keine temporäre Rufnummer aus dem identifizierten Backup-Pool verfügbar ist wird ermittelt, ob eine temporäre Rufnummer aus einem systemweiten Pool verfügbar ist (245); und
- wenn eine temporäre Rufnummer aus dem systemweiten Pool verfügbar ist wird eine temporäre Rufnummer aus dem systemweiten Pool (250) ausgewählt.

2. Das Verfahren nach Anspruch 1, wobei der Schritt des Zuweisens der Rufnummer in Abhängigkeit vom Ursprungsort für den Anruf und vom Aufenthaltsort der Mobilstation das Bestimmen, dass die Rufnummer mit mindestens entweder einem Media-Gateway, welches den Aufenthaltsort bedient, oder einer Basisstation, welche den Aufenthaltsort bedient, assoziiert ist, umfasst.

3. Das Verfahren nach Anspruch 1, wobei der Schritt des Identifizierens eines Pools von temporären Rufnummern in Reaktion auf eine direkt von einem mit dem Signalisierungsknoten verbundenen Heimregister empfangene Anforderung für die Bereitstellung einer Roaming-Nummer ausgeführt wird.

4. Das Verfahren nach Anspruch 1, weiterhin umfassend: Senden (260) der Rufnummer in Antwort auf die Anforderung; und Routen (265) des Anrufs zu dem bestimmten Knoten.

5. Das Verfahren nach Anspruch 1, wobei der Knoten einen einer Mehrzahl von Knoten, welche mit einem der Mehrzahl von geografisch verteilten Vermittlungsknoten assoziiert sind, umfasst.

6. Das Verfahren nach Anspruch 1, wobei die Rufnummer eine Handover-Nummer umfasst.

7. Das Verfahren nach Anspruch 1, wobei das Rufnummer-Pool und die zugewiesene Rufnummer Roaming-Nummern umfassen.

8. Das Verfahren nach Anspruch 1, wobei der Knoten den Teilbereich der geografischen Zone bedient.

9. Das Verfahren nach Anspruch 1, wobei die Anforderung für Routing-Informationen eine Anforderung für eine Roaming-Nummer umfasst.

10. Telekommunikationssystem (100), umfassend: eine verteilte Mobilvermittlungsstelle (105) einschließlich:
- Einer Mehrzahl von Media-Gateways (115(1), 115(2)), wobei jedes Media-Gateway eine assoziierte Mehrzahl von Basisstationen (125(1), 125(2)) aufweist;
- eines Servers (110), welcher dazu ausgelegt ist, das Signalisieren für die Mehrzahl von Media-Gateways zu verwalten; und
- eines Speichers (175) zum Speichern mindestens eines Teilbereichs eines Satzes von Rufnummern für die Zuweisung durch die verteilte Mobilvermittlungsstelle;
**dadurch gekennzeichnet, dass**
- die Mehrzahl von Media-Gateways geografisch verteilt ist;
- die Rufnummern in Pools von Rufnummern aufgeteilt sind; und
- die verteilte Mobilvermittlungsstelle dazu ausgelegt ist, eine Rufnummer in Abhängigkeit von einem Ursprungsort für den Anruf und von dem Aufenthaltsort der Mobilstation zuzuweisen und die folgenden Schritte auszuführen:
- Bestimmen (210) eines Aufenthaltsorts der Mobilstation;
- Identifizieren (215) eines mit dem Aufenthaltsort der Mobilstation assoziierten Pools von temporären Rufnummern;
- Ermitteln, ob eine temporäre Rufnummer aus dem identifizierten Pool von temporären Rufnummern verfügbar ist;
- wenn eine temporäre Rufnummer aus dem Pool von temporären Rufnummern verfügbar ist, Auswählen (225) der temporären Rufnummer aus dem Pool von temporären Rufnummern zur Verwendung für die Herstellung der Verbindung mit der Mobilstation;
- wenn keine temporäre Rufnummer aus dem Pool von temporären Rufnummern verfügbar ist, Identifizieren eines Backup-Pools von temporären Rufnummern;
- Ermitteln, ob eine temporäre Rufnummer aus dem identifizierten Backup-Pool verfügbar ist (235);
- wenn dies der Fall ist wird eine temporäre Rufnummer aus dem identifizierten Backup-Pool (240) ausgewählt;
- wenn keine temporäre Rufnummer aus dem identifizierten Backup-Pool verfügbar ist wird ermittelt, ob eine temporäre Rufnummer aus einem systemweiten Pool verfügbar ist (245); und
- wenn eine temporäre Rufnummer aus dem systemweiten Pool verfügbar ist wird eine temporäre Rufnummer aus dem systemweiten Pool (250) ausgewählt.

11. Das Telekommunikationssystem nach Anspruch 10, wobei der besagte Schritt des Zuweisens der Rufnummer in Abhängigkeit von dem Ursprungsort für den Anruf und von dem Aufenthaltsort der Mobilstation das Bestimmen, dass die Rufnummer mindestens entweder mit dem Media-Gateway, welches den Aufenthaltsort bedient, oder mit einer Basisstation, welche den Aufenthaltsort bedient, assoziiert ist, umfasst.

12. Das Telekommunikationssystem nach Anspruch 10, wobei die verteilte Mobilvermittlungsstelle dazu ausgelegt ist, ein Pool von temporären Rufnummern in Reaktion auf eine direkt von einem mit dem Signalisierungsknoten verbundenen Heimregister empfangene Anforderung für die Bereitstellung einer Roaming-Nummer zu identifizieren.

13. Das Telekommunikationssystem nach Anspruch 10, wobei sich die von dem Server verwaltete Signalisierung auf das Steuern des von den Media-Gateways verwalteten Trägerverkehrs bezieht.

14. Das Telekommunikationssystem nach Anspruch 13, wobei jedes Media-Gateway Vermittlungsdienste für Trägerverkehr in nur einem Teilbereich der Servicezone bereitstellt.

15. Das Telekommunikationssystem nach Anspruch 10, wobei jedes Rufnummer-Pool mit einem Media-Gateway assoziiert ist.

16. Das Telekommunikationssystem nach Anspruch 10, wobei jedes Rufnummer-Pool mit einem Basis-Gateway assoziiert ist.

17. Das Telekommunikationssystem nach Anspruch 10, wobei ein Pool-Index mit jedem Rufnummer-Pool assoziiert ist, und wobei der Pool-Index verwendet wird, um die in jedem Pool enthaltenen Rufnummern zu identifizieren.

18. Das Telekommunikationssystem nach Anspruch 10, wobei eine zugewiesene Rufnummer es einem anfragenden Knoten ermöglicht, eine Rufverbindung selektiv zu einem Media-Gateway in einem Teilbereich der Servicezone, welche die Mobilstation einschließt, zu routen.

19. Das Telekommunikationssystem nach Anspruch 10, wobei der Server in Antwort auf eine Anforderung für die Bereitstellung entweder einer Roaming-Nummer oder einer Handover-Nummer eine Rufnummer aus einem Rufnummer-Pool zuteilt.

20. Produkt umfassend ein computerlesbares Medium zum Speichern von Befehlen, welche die Datenverarbeitungsvorrichtung anweisen, die folgenden Schritte auszuführen:
- Empfangen einer Anforderung für Routing-Informationen an einem Signalisierungsknoten in einem Telekommunikationsnetzwerk, wobei der Signalisierungsknoten die Signalisierung in einer Servicezone für eine Mehrzahl von Vermittlungsknoten verwaltet, wobei die Anforderung für Routing-Informationen mit einem Anruf, welcher eine Mobilstation einbezieht, assoziiert ist, und wobei jeder Vermittlungsknoten nur mit einem Teilbereich der Servicezone assoziiert ist; und
- Auswählen einer Rufnummer zur Verwendung für die Herstellung der Verbindung mit der Mobilstation;
**dadurch gekennzeichnet, dass**:
- Die Mehrzahl von Vermittlungsknoten geografisch verteilt ist; und
- das Produkt weiterhin verursacht, dass die besagte Datenverarbeitungsvorrichtung eine Rufnummer in Abhängigkeit von einem Ursprungsort für den Anruf und von dem Aufenthaltsort der Mobilstation zuweist und die folgenden Schritte ausführt:
- Bestimmen (210) eines Aufenthaltsorts der Mobilstation;
- Identifizieren (215) eines mit dem Aufenthaltsort der Mobilstation assoziierten Pools von temporären Rufnummern;
- Ermitteln, ob eine temporäre Rufnummer aus dem identifizierten Pool von temporären Rufnummern verfügbar ist;
- wenn eine temporäre Rufnummer aus dem Pool von temporären Rufnummern verfügbar ist, Auswählen (225) der temporären Rufnummer aus dem Pool von temporären Rufnummern zur Verwendung für die Herstellung der Verbindung mit der Mobilstation;
- wenn keine temporäre Rufnummer aus dem Pool von temporären Rufnummern verfügbar ist, Identifizieren eines Backup-Pools von temporären Rufnummern;
- Ermitteln, ob eine temporäre Rufnummer aus dem identifizierten Backup-Pool verfügbar ist (235);
- wenn dies der Fall ist wird eine temporäre Rufnummer aus dem identifizierten Backup-Pool (240) ausgewählt;
- wenn keine temporäre Rufnummer aus dem identifizierten Backup-Pool verfügbar ist wird ermittelt, ob eine temporäre Rufnummer aus einem systemweiten Pool verfügbar ist (245); und
- wenn eine temporäre Rufnummer aus dem systemweiten Pool verfügbar ist wird eine temporäre Rufnummer aus dem systemweiten Pool (250) ausgewählt.

21. Das Produkt nach Anspruch 20, wobei der besagte Schritt des Zuweisens der Rufnummer in Abhängigkeit von dem Ursprungsort für den Anruf und von dem Aufenthaltsort der Mobilstation das Bestimmen, dass die Rufnummer mit mindestens entweder einem Media-Gateway, welches den Aufenthaltsort bedient, oder einer Basisstation, weiche den Aufenthaltsort bedient, assoziiert ist, umfasst.

22. Das Produkt nach Anspruch 20, wobei der bestimmte Knoten entweder einen Vermittlungsknoten oder eine Basisstation umfasst, und wobei das computerlesbare Medium Befehle speichert, um die Datenverarbeitungsvorrichtung weiterhin anzuweisen, das Routen des Anrufs zu dem bestimmten Knoten zu steuern.

23. Das Produkt nach Anspruch 20, wobei der Signalisierungsknoten Signalisierungsverkehr für eine verteilte Mobilvermittlungsstelle verwaltet, und wobei die Vermittlungsknoten Trägerverkehr für die verteilte Mobilvermittlungsstelle verwalten.

## Revendications

1. Procédé (200) d'assignation de numéros d'appel dans un environnement de centre de commutation mobile réparti, le procédé comprenant les étapes suivantes :
- réception (205) d'une demande d'acheminement d'information sur un coud de signalisation dans un réseau de télécommunications, le noeud de signalisation traitant la signalisation pour une pluralité de noeuds de commutation (115(1), 115(2)), dans lequel la demande d'acheminement d'information est associée à un appel à une station mobile ;
**caractérisé en ce que**
- ledit noeud de signalisation traite la signalisation dans une zone géographique pour une pluralité de noeuds de commutation répartis géographiquement ; et
- un numéro d'appel est assigné en fonction d'un lieu d'origine pour l'appel et de l'emplacement de la station mobile,
- le procédé comprenant également les étapes consistant à :
- déterminer (210) un emplacement de la station mobile ;
- identifier (215) une réserve de numéros d'appel temporaires associés à l'emplacement de la station mobile ;
- effectuer une détermination pour savoir si un numéro d'appel temporaire de la réserve identifiée de numéros d'appel temporaires est disponible ;
- si un numéro d'appel temporaire de la réserve de numéros d'appel temporaires est disponible, sélectionner (225) le numéro d'appel temporaire dans la réserve de numéros d'appel temporaires pour l'utiliser pour connecter l'appel à la station mobile ;
- si un numéro d'appel temporaire de la réserve de numéros d'appel temporaires n'est pas disponible, identifier une réserve de numéros d'appel temporaires de secours ;
- effectuer une détermination pour savoir si un numéro d'appel temporaire de la réserve de secours identifiée est disponible (235) ;
- si oui, un numéro d'appel temporaire est sélectionné dans la réserve de secours identifiée (240) ;
- si un numéro d'appel temporaire n'est pas disponible dans la réserve de secours identifiée, une détermination est effectuée pour savoir si un numéro d'appel temporaire d'une réserve du système entier est disponible (245) ; et
- si un numéro d'appel temporaire est disponible dans la réserve du système entier, un numéro d'appel temporaire est sélectionné dans la réserve du système (250).

2. Procédé selon la revendication 1, dans lequel ladite étape d'assignation du numéro d'appel en fonction du lieu d'origine de l'appel et de l'emplacement de la station mobile comprend la détermination du fait que le numéro d'appel est associé à au moins l'une d'une passerelle de média desservant l'emplacement et d'une station de base desservant l'emplacement.

3. Procédé selon la revendication 1, dans lequel l'étape d'identification d'une réserve de numéros d'appel temporaires est exécutée en réponse à une demande de fourniture de numéro itinérant reçue directement depuis une base de données HLR connectée au noeud de signalisation.

4. Procédé selon la revendication 1, comprenant en outre : envoi (260) du numéro d'appel en réponse à la demande ; et acheminement (265) de l'appel vers le noeud particulier.

5. Procédé selon la revendication 1, dans lequel le noeud comprend l'un d'une pluralité de noeuds associés à l'un de la pluralité de noeuds de commutation répartis géographiquement.

6. Procédé selon la revendication 1, dans lequel le numéro d'appel comprend un numéro de transfert.

7. Procédé selon la revendication 1, dans lequel la réserve de numéros d'appel et le numéro d'appel assigné comprennent des numéros itinérants.

8. Procédé selon la revendication 1, dans lequel le noeud dessert la portion de la zone géographique.

9. Procédé selon la revendication 1, dans lequel la demande d'acheminement d'information comprend une demande de numéro itinérant.

10. Système de télécommunications (100) comprenant : un centre de commutation mobile réparti (105) comprenant :
- une pluralité de passerelles de média (115(1), 115(2)), chaque passerelle de média ayant une pluralité de stations de base associées (125(1), 125(2)) ;
- un serveur (110) adapté pour traiter la signalisation pour la pluralité de passerelles de média ; et
- une mémoire (175) stockant au moins une partie d'un ensemble de numéros d'appel à allouer par le centre de commutation mobile réparti ;
**caractérisé en ce que**
- la pluralité de passerelles de média est répartie géographiquement ;
- les numéros d'appel sont segmentés en réserves de numéros d'appel ; et
- le centre de commutation mobile réparti est adapté pour assigner un numéro d'appel en fonction d'un lieu d'origine de l'appel et de l'emplacement de la station mobile, et pour exécuter les étapes suivantes :
- déterminer (210) un emplacement de la station mobile ;
- identifier (215) une réserve de numéros d'appel temporaires associés à l'emplacement de la station mobile ;
- effectuer une détermination pour savoir si un numéro d'appel temporaire de la réserve identifiée de numéros d'appel temporaires est disponible ;
- si un numéro d'appel temporaire de la réserve de numéros d'appel temporaires est disponible, sélectionner (225) le numéro d'appel temporaire dans la réserve de numéros d'appel temporaires pour l'utiliser pour connecter l'appel à la station mobile ;
- si un numéro d'appel temporaire de la réserve de numéros d'appel temporaires n'est pas disponible, identifier une réserve de numéros d'appel temporaires de secours ;
- effectuer une détermination pour savoir si un numéro d'appel temporaire de la réserve de secours identifiée est disponible (235) ;
- si oui, un numéro d'appel temporaire est sélectionné dans la réserve de secours identifiée (240) ;
- si un numéro d'appel temporaire n'est pas disponible dans la réserve de secours identifiée, une détermination est effectuée pour savoir si un numéro d'appel temporaire d'une réserve du système entier est disponible (245) ; et
- si un numéro d'appel temporaire est disponible dans la réserve du système entier, un numéro d'appel temporaire est sélectionné dans la réserve du système (250).

11. Système de télécommunications selon la revendication 10, dans lequel ladite étape d'assignation du numéro d'appel en fonction du lieu d'origine de l'appel et de l'emplacement de la station mobile comprend la détermination du fait que le numéro d'appel est associé à au moins l'une d'une passerelle de média desservant l'emplacement et d'une station de base desservant l'emplacement.

12. Système de télécommunications selon la revendication 10, dans lequel le centre de commutation mobile réparti est adapté pour identifier une réserve de numéros d'appel temporaires en réponse à une demande de fourniture de numéro itinérant reçue directement depuis une base de données HLR connectée au noeud de signalisation.

13. Système de télécommunications selon la revendication 10, dans lequel la signalisation traitée par le serveur est relative au contrôle du trafic de porteuses géré par les passerelles de média.

14. Système de télécommunications selon la revendication 13, dans lequel chaque passerelle de média fournit des services de commutation pour le trafic de porteuses dans une seule portion de la zone de service.

15. Système de télécommunications selon la revendication 10, dans lequel chaque réserve de numéros d'appel est associée à une passerelle de média.

16. Système de télécommunications selon la revendication 10, dans lequel chaque réserve de numéros d'appel est associée à une passerelle de base.

17. Système de télécommunications selon la revendication 10, dans lequel un index de réserve est associé à chaque réserve de numéros d'appel et l'index de réserve est utilisé pour identifier les numéros d'appel inclus dans chaque réserve.

18. Système de télécommunications selon la revendication 10, dans lequel un numéro d'appel alloué permet à un noeud demandeur d'acheminer de façon sélective une connexion d'appel vers une passerelle de média dans une partie de la zone de service qui inclut la station mobile.

19. Système de télécommunications selon la revendication 10, dans lequel le serveur alloue un numéro d'appel d'une réserve de numéros d'appel en réponse à une demande de l'un d'un numéro itinérant et d'un numéro de transfert.

20. Article comprenant un support lisible par machine stockant des instructions qui ont pour effet qu'un appareil de traitement de données :
- reçoit une demande d'acheminement d'information sur un noeud de signalisation dans un réseau de télécommunications, le noeud de signalisation traitant la signalisation dans une zone de service pour une pluralité de noeuds de commutation, dans lequel la demande d'acheminement d'information est associée à un appel impliquant une station mobile et chaque noeud de commutation associé à seulement une portion de la zone de service ; et
- sélectionne un numéro d'appel à utiliser pour connecter l'appel à la station mobile ; **caractérisé en ce que** :
- la pluralité de noeuds de commutation est répartie géographiquement ; et
- l'article ayant en outre pour effet que ledit appareil de traitement de données assigne un numéro d'appel en fonction d'un lieu d'origine de l'appel et de l'emplacement de la station mobile, et exécute les étapes suivantes :
- déterminer (210) un emplacement de la station mobile ;
- identifier (215) une réserve de numéros d'appel temporaires associés à l'emplacement de la station mobile ;
- effectuer une détermination pour savoir si un numéro d'appel temporaire de la réserve identifiée de numéros d'appel temporaires est disponible ;
- si un numéro d'appel temporaire de la réserve de numéros d'appel temporaires est disponible, sélectionner (225) le numéro d'appel temporaire dans la réserve de numéros d'appel temporaires pour l'utiliser pour connecter l'appel à la station mobile ;
- si un numéro d'appel temporaire de la réserve de numéros d'appel temporaires n'est pas disponible, identifier une réserve de numéros d'appel temporaires de secours ;
- effectuer une détermination pour savoir si un numéro d'appel temporaire de la réserve de secours identifiée est disponible (235) ;
- si oui, un numéro d'appel temporaire est sélectionné dans la réserve de secours identifiée (240) ;
- si un numéro d'appel temporaire n'est pas disponible dans la réserve de secours identifiée, une détermination est effectuée pour savoir si un numéro d'appel temporaire d'une réserve du système entier est disponible (245) ; et
- si un numéro d'appel temporaire est disponible dans la réserve du système entier, un numéro d'appel temporaire est sélectionné dans la réserve du système (250).

21. Article selon la revendication 20, dans lequel ladite étape d'assignation du numéro d'appel en fonction du lieu d'origine de l'appel et de l'emplacement de la station mobile comprend la détermination du fait que le numéro d'appel est associé à au moins l'une d'une passerelle de média desservant l'emplacement et d'une station de base desservant l'emplacement.

22. Article selon la revendication 20, dans lequel le noeud particulier comprend l'un d'un noeud de commutation ou d'une station de base et le support lisible par machine stocke des instructions qui ont en outre pour effet que l'appareil de traitement de données contrôle l'acheminement de l'appel vers le noeud particulier.

23. Article selon la revendication 20, dans lequel le noeud de signalisation traite le trafic de signalisation pour un centre de commutation mobile réparti et les noeuds de commutation traitent le trafic de porteuses pour le centre de commutation mobile réparti.
